# EUROPEAN PATENT APPLICATION

(11) **EP 4 586 066 A1**
(43) Date of publication of application: **16.07.2025**
(21) Application number: 25151312.3
(22) Date of filing: 10.01.2025
(51) Int. Cl.: G06F 3/04842, G06F 3/0488, G06F 3/04883

(54) **ENHANCED NATURAL USER INTERFACE CANVASES**

(30) Priority: 12.01.2024 US 202418411589
(71) Applicant: Microsoft Technology Licensing, LLC, Redmond, WA 98052-6399 (US)
(72) Inventor: FANG, Biyi, Redmond, 98052-6399 (US); ESTRADA, Julio, Redmond, 98052-6399 (US); LI, Xuan, Redmond, 98052-6399 (US); TU, Xiao, Redmond, 98052-6399 (US); SUN, Yibo, Redmond, 98052-6399 (US)
(74) Representative: Page White Farrer

(57) **Abstract**

Systems and methods for a natural user interface (NUI) canvas and related functions are provided herein. In an example, a method includes receiving, from a client device, a first non-linear interaction within a productivity application containing a composition layer and a discovery layer, determining, by a natural user interface (NUI) engine, a first user intent based on the first non-linear interaction, and generating, by the NUI engine, a first prompt based on the first user intent and the first non-linear interaction. The NUI engine then submits the first prompt, which requests a first response from a content generator based on the first non-linear interaction, to the content generator, and subsequently receives the first response. The NUI engine also generates a first card based on the first response within the discovery layer of the productivity application, the discovery layer overlaying on to the composition layer.

## Description

### TECHNICAL FIELD

Aspects of the disclosure are related to the field of computer software applications and services and, in particular, to an enhanced natural user interface (NUI) canvas for productivity applications and their related functions.

### BACKGROUND

The utilization of content generators has witnessed a significant uptick in recent years, reflecting a growing reliance on automated tools to streamline content creation processes. Within this evolving landscape, conventional user interactions with content generators typically adhere to a linear paradigm, wherein users directly prompt the system to generate specific content based on predefined parameters or instructions. In this traditional model, users initiate the content generation process by inputting specific criteria, such as keywords, topics, formats, or desired outcomes, into the content generator interface. The system then processes these inputs through its algorithms and artificial intelligence capabilities to produce content that aligns with the user's requests. This linear interaction framework emphasizes a direct and straightforward approach, enabling users to exert precise control over the content creation process while leveraging the technology's capabilities to streamline and expedite their creative endeavors. However, this linear interaction model may limit spontaneity, creativity, and serendipity in content generation, as it primarily operates within predefined parameters and user-initiated prompts, potentially constraining the exploration of alternative perspectives or innovative content formats.

The linear interactions inherent to current content generators, while offering structured and predictable outcomes, can inadvertently stifle creativity and limit audience engagement, particularly among users with diverse abilities or unconventional perspectives. By adhering strictly to predefined parameters and user-initiated prompts, these systems may inadvertently create echo chambers of content or provide inadequate responses since responses are based solely on a user's prompt. Furthermore, the rigidity of the linear interaction model can deter users with varying levels of expertise, knowledge, or capabilities from fully harnessing the potential of content generators to express their ideas, insights, or visions authentically.

Moreover, conventional techniques of engaging in linear interactions with content generators, such as directly prompting the system for specific outputs, often introduces time-consuming interruptions that can disrupt a user's creative or productivity flow. The need to pause, formulate precise prompts, and await generated content breaks the rhythm of continuous ideation and execution, forcing users to navigate between their creative thought processes and the operational demands of the content generator. This disjointed workflow not only diminishes momentum but also imposes cognitive overhead as users recalibrate their focus and intentions repeatedly. Consequently, the inherent time constraints and interruptions associated with linear interactions can undermine fluidity, inhibit spontaneity, and curtail the seamless integration of creative insights within broader projects or endeavors.

Accordingly, there is a need for a natural user interface ("NUI") engine, and its related functions, for providing an enhanced NUI canvas within productivity applications that allow users with a range of diverse abilities and creative preferences to use non-linear interactions with a content generator to generate content within the natural flow of creativity and productivity. In other words, there is a need to evolve content generator technologies beyond their linear frameworks, fostering inclusivity, adaptability, and creativity to accommodate a broader spectrum of user abilities, preferences, and aspirations in the dynamic landscape of content creation and consumption.

### SUMMARY

Technology disclosed herein includes software applications and services that provide a natural user interface (NUI) canvas and its related functions. The NUI canvas includes a NUI engine that allows users to interact with a content generator via non-linear interactions. That is, as a user generates content within a productivity application, the NUI engine monitors and identifies non-linear interactions made by the user with respect to content objects (e.g., text, images, videos, audio clips, cards) within the productivity application. Based on the non-linear interaction, which may include circling, marking, handwriting, speaking, and even gesturing, the NUI engine determines the user's intention by the non-linear interaction. This is referred to herein as the user intent. Once the NUI engine determines the user intent based on the non-linear interaction, and in some cases, the context of the non-linear interaction, the NUI engine generates a prompt that is subsequently submitted to a content generator. The content generator receives the prompt and generates a respective response.

When the NUI engine receives the response from the content generator, the NUI engine generates a card based on the response and provides the response within a discovery layer of the NUI canvas. The NUI canvas includes the discovery layer which overlays a composition layer within the productivity application. As will be described in greater detail below, the discovery layer is separate from the composition layer and allows a user to organize, arrange, and otherwise manipulate content objects within the discovery layer without impacting content objects within the composition layer.

This Summary is provided to introduce a selection of concepts in a simplified form that are further described below in the Technical Disclosure. It may be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure may be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an operational environment for providing an enhanced NUI canvas and its related functions, according to an embodiment herein;
Figure 2 illustrates a system for providing a NUI canvas and its related functions, according to an embodiment provided herein;
Figure 3 illustrates a process for providing a NUI canvas and its related functions, according to an embodiment herein;
Figure 4 illustrates a graphical user interface (GUI) of a NUI canvas, according to an embodiment herein;
Figure 5 illustrates a non-linear interaction made within an example NUI canvas, according to an embodiment herein;
Figure 6 illustrates an example card generated by a NUI engine based on the non-linear interaction illustrated in Figure 5, according to an embodiment herein;
Figure 7 illustrates variations of a card generated by the NUI engine, according to an embodiment herein;
Figure 8 illustrates additional cards generated by the NUI engine, according to an embodiment herein;
Figure 9 illustrates additional non-linear interactions with cards generated by the NUI engine, according to an embodiment herein;
Figure 10 illustrates a card generated responsive to the non-linear interaction received by the NUI engine as illustrated in Figure 9, according to an embodiment herein;
Figures 11A and 11B illustrate additional examples of non-linear interactions and subsequently generated cards, according to an embodiment herein;
Figure 12 illustrates another non-linear interaction and a respectively generated card, according to an embodiment herein;
Figure 13 illustrates a group interaction within a NUI canvas, according to an embodiment herein;
Figure 14 illustrates example options provided to a user responsive to a group interaction, according to an embodiment herein;
Figure 15 illustrates a summary card generated based on the group interaction of Figure 13, according to an embodiment herein;
Figure 16 illustrates moving the summary card of Figure 15 within the discovery layer of the NUI canvas, according to an embodiment herein;
Figure 17 illustrates generation of content within the composition layer of the NUI canvas, according to an embodiment herein; and
Figure 18 shows an example client device suitable for providing an enhanced NUI canvas and related functions, according to an embodiment herein.

### DETAILED DESCRIPTION

Content generators have emerged as transformative tools in modern society, seamlessly weaving into various facets of daily life and reshaping how individuals interact with digital content. These sophisticated systems leverage advanced algorithms and artificial intelligence to automate the creation of textual, visual, or audio content tailored to specific user requirements or preferences. As their prevalence continues to escalate, content generators are becoming ubiquitous across platforms, applications, and industries, offering unprecedented opportunities to streamline content creation processes, enhance user engagement, and fuel innovation. Central to the functionality of content generators is the concept of linear interaction, wherein users initiate and guide the content generation process through direct prompts or predefined parameters. This linear interaction model empowers users to input specific criteria, such as keywords, topics, formats, or stylistic preferences, into the content generator interface, thereby influencing the generated content's scope, relevance, and quality. By navigating this structured pathway, users maintain control over the content creation journey, albeit within the confines of the system's capabilities and predefined parameters, highlighting the symbiotic relationship between human creativity and machine intelligence in shaping the digital landscape of today's interconnected world.

While the conventional linear interaction model for content generators offers a structured approach to content creation, it is not without its drawbacks and limitations. One significant downside is the potential stifling of spontaneous creativity and organic ideation, as users may feel constrained by the predefined parameters and limited flexibility inherent in this model. Additionally, the linear interaction paradigm can lead to repetitive or formulaic outputs, as users often navigate familiar pathways and patterns to elicit desired content, thereby diminishing novelty and diversity in generated materials. Furthermore, the repetitive nature of direct prompts and structured interactions can disrupt users' cognitive flow, impeding productivity and inhibiting the seamless integration of creative insights within broader projects or endeavors.

Additionally, current linear interaction models with content generators can impede and limit users with differing physical, technological, and linguistic abilities. That is, in a linear interaction model, users are tasked with directly inputting prompts or navigating specific parameters to guide content generation. Thus, individuals with varying physical, technological, or linguistic capacities may encounter significant challenges that hinder their engagement and interactions with a content generator. For instance, users with mobility impairments may find it challenging to navigate intricate interfaces or input precise prompts, thereby restricting their ability to leverage the platform's capabilities fully. Similarly, individuals with limited technological literacy or access to specialized assistive technologies may face barriers that impede their participation, excluding them from the content creation process. Furthermore, the inherent constraints of the linear interaction model may inadvertently prioritize users with specific abilities or proficiencies, thereby marginalizing those with diverse needs and capabilities. As a result, the linear interaction paradigm can perpetuate inequities, curtail accessibility, and undermine the principle of inclusivity, highlighting the need for more adaptive and user-centric approaches to content generation that accommodate a broader spectrum of users and abilities.

Moreover, traditional methods of interacting with content generators through linear means, like directly instructing the system for particular results, frequently lead to interruptions that consume valuable time and disrupt a user's creative or work momentum. The necessity to momentarily halt, craft specific instructions, and then await the content disrupts the natural flow of creative thinking and action. This fragmented approach not only slows progress but also adds mental strain as users frequently shift their attention and objectives. As a result, the interruptions and time constraints inherent in such linear interactions can impede creativity, limit spontaneity, and hinder the smooth incorporation of innovative ideas into larger projects or tasks.

To address the shortcomings of current content generator experiences, in particular the linear interactions with content generators, an example natural user interface (NUI) canvas and its related functions are provided herein. The NUI canvas includes a NUI engine that allows users to interact with one or more content generators in a non-linear manner. That is, the NUI engine monitors a user's interactions with a productivity application, such as a whiteboard, and interprets the user's interactions to identify interactions meant to elicit a response from a content generator. When the NUI engine identifies an interaction that is meant to elicit a response from a content generator, the NUI engine determines the user's intent based on the interaction and context of the intent. The NUI engine then generates a prompt based on the user's intent and the context to submit to the content generator.

By interpreting a user's interaction with a productivity application and creating a prompt based on the user's intent and context of the interaction, the NUI canvas allows the user to engage with a content generator using a variety of modalities, including texting, drawing, speaking, images, videos, and even gesturing. In this manner, instead of confining a user to texting into a chat box to engage with a content generator, the NUI canvas allows the user to engage with the content generator within the flow of a creative process. As can be appreciated, by allowing a variety of modalities, as well as spatial flexibility within the productivity application, the NUI canvas does not impede the creative flow of users and opens up content generation to users having differing physical, technological, and linguistic abilities.

As will be expanded on in the following discussion, the NUI canvas strikes a balance between user control and operational efficiency thereby enhancing the user experience and maximizing the transformative potential of content generators in facilitating innovation and productivity across diverse user capabilities and creative processes. In other words, by allowing non-linear interactions between a user and a content generator, the NUI canvas avoids creating an echo chamber and opens up content generation to users having diverse technological and linguistic abilities. Additionally, the NUI canvas allows for content generation to fall within the natural flow of a user's creative process, without breaking the rhythm of continuous ideation and execution.

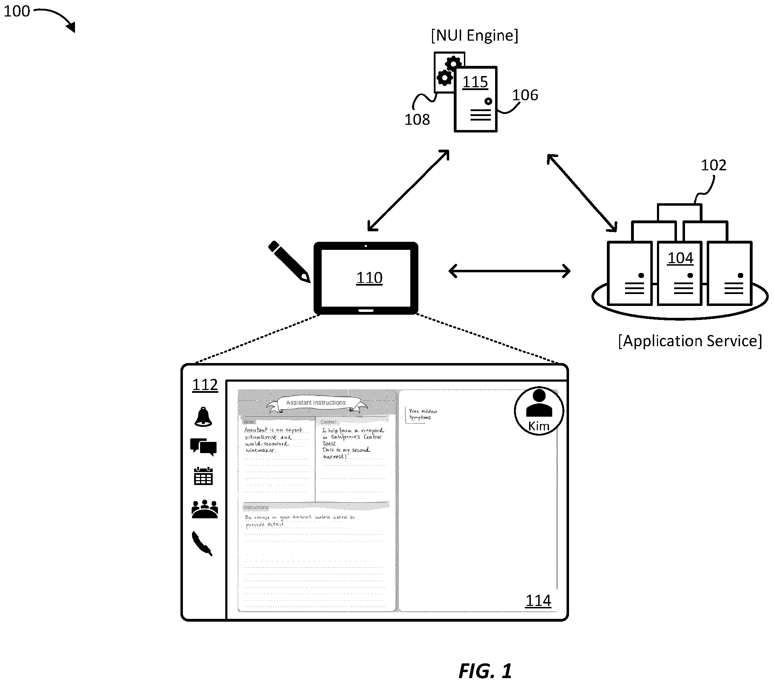

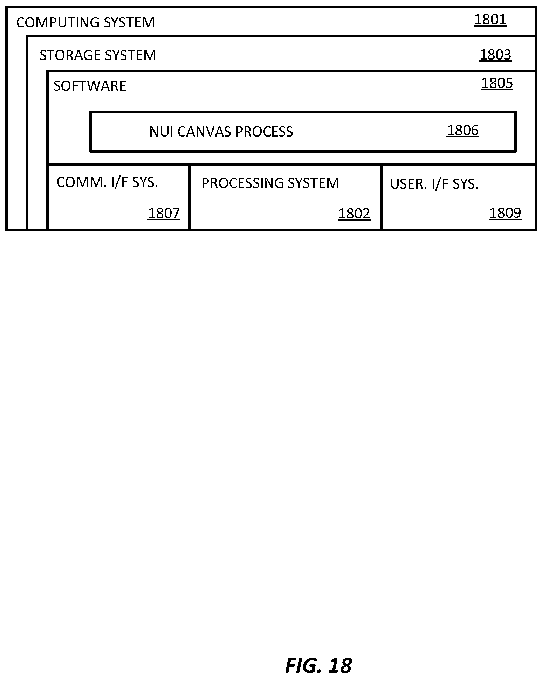

Turning now to Figure **1**, Figure 1 illustrates an operational environment 100 for providing an enhanced NUI canvas and related functions, according to an embodiment herein. As illustrated, the operational environment 100 includes an application service 102, a NUI engine 106, and a client device 110. The application service 102 employs one or more server computers 104 co-located with respect to each other or distributed across one or more data centers. Example servers include web servers, application servers, virtual or physical servers, or any combination or variation thereof, of which computing system 1801 in Figure 18 is broadly representative.

The client device 110 communicates with application service 102 via one or more internets and intranets, the Internet, wired and wireless networks, local area networks (LANs), wide area networks (WANs), or any other type of network or combination thereof. Examples of the client device 110 may include personal computers, tablet computers, mobile phones, gaming consoles, wearable devices, Internet of Things (IoT) devices, and any other suitable devices, of which computing system 1801 in Figure 18 is also broadly representative.

Broadly speaking, the application service 102 provides software application services to end points, such as the client device 110, examples of which include productivity software for creating content (e.g., word processing documents, spreadsheets, and presentations), email software, and collaboration software. The client device 110 loads and executes software applications locally that interface with services and resources provided by the application service 102. The applications may be natively installed and executed applications, web-based applications that execute in the context of a local browser application, mobile applications, streaming applications, or any other suitable type of application. Example services and resources provided by the application service 102 include front-end servers, application servers, content storage services, authorization and authentication services, and the like.

The application service 102 also includes an integration with the NUI engine 106, which provides one or more functions of the NUI canvas, as described herein. For example, as the client device 110 interacts with a productivity application 114 via a user interface 112, the NUI engine 106 monitors a user's interaction with the productivity application 114 via the application service 102 for interactions intended to elicit a response from a content generator 108. The content generator 108, although illustrated as a single content generator, may be or include multiple content generators 108. The content generator 108 may use or include advanced AI models, such as recurrent neural networks (RNNs), transformer architectures like GPT (Generative Pre-trained Transformer), and convolutional neural networks (CNNs), to autonomously create textual, visual, or auditory content. Examples of the content generator 108 may include one or more large language models, such as ChatGPT, GPT-2, GPT-3, BERT (Bidirectional Encoder Representations from Transformers), and UniLM (Unified Language Model). In some embodiments, the content generator 108 may include image or audio generation models, such as Generative Adversarial Networks (GANs), DeepDream, DeepArt, DALL-E, WaveNet, GANs for Audio, NSynth, and DeepVoice. As should be appreciated, the type of AI model used or included by the content generator 108 may vary depending on the type of productivity application 114 used by the user of the client device 110.

As a user interacts with the productivity application 114, the NUI engine 106 identifies interactions between the client device 110 and the productivity application 114. When the NUI engine 106 determines that a user intends to elicit a response from the content generation 108 based on an interaction, the NUI engine 106 determines a user intent for the response. That is, as used herein, user intent refers to a user's desired type or format of a response. For example, if the user wants to learn more about a topic written in the productivity application 114, the user may draw a question mark next to the topic. Based on the question mark, the NUI engine 106 may determine the user's intent to learn more about that topic. As such, the NUI engine 106 may generate a prompt requesting more information on the topic. As will be described in greater detail below, the NUI engine 106 may also determine a user intent based on a user profile or information associated with the client device 110 or a user of the client device 110.

Once the NUI engine 106 generates a prompt based on the user's interaction with the productivity application 114, the NUI engine 106 submits the prompt to the content generator 108 for generation of the requested response. To provide these functions, the NUI engine 106 employs one or more server computers 115 co-located with respect to each other or distributed across one or more data centers, of which computing system 1801 in Figure 18 is broadly representative. In some cases, the NUI engine 106 hosts the content generator 108 on the server computers 115 as well, while in other cases the content generator 108 is hosted separately from the NUI engine 106, such as by a third party.

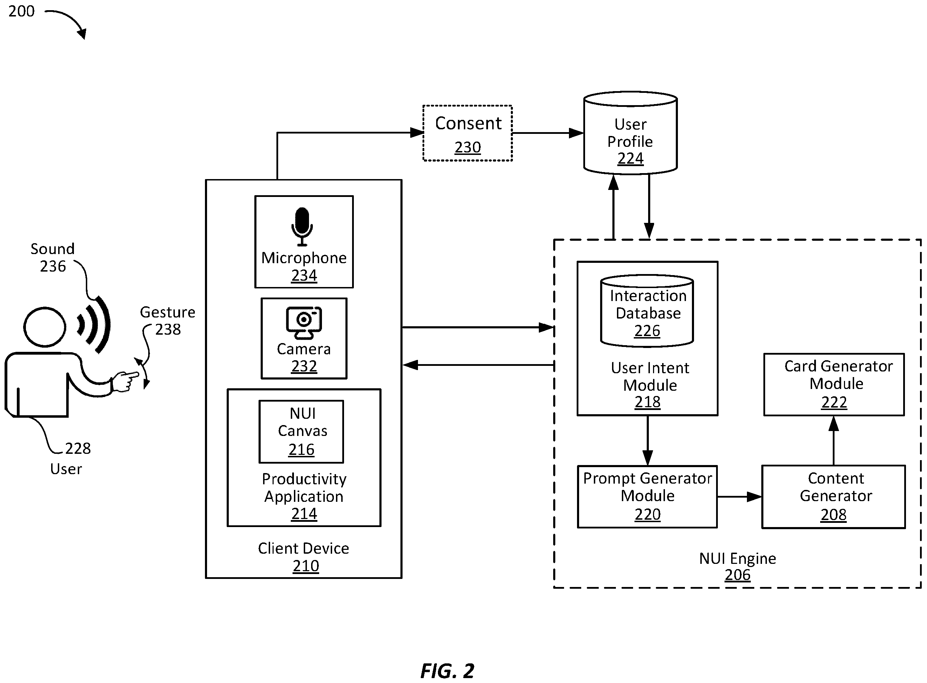

Turning now to **Figure 2**, a system 200 for providing an NUI canvas 216 is illustrated, according to an embodiment herein. The NUI canvas 216, as illustrated, is provided as part of a productivity application 214 executing on a client device 210, which may be the same or similar to the productivity application 114 executing on the client device 110. The NUI canvas 216 may be part or a feature of the productivity application 114 or may be an add-in to the productivity application 114. For example, a user may download and install the NUI canvas 216 as an "add-in" application that is integrated into the context of the main, productivity application 214.

To provide one or more functions of the NUI canvas 216, the NUI canvas 216 includes a NUI engine 206, which may be the same or similar to the NUI engine 106. The NUI engine 160 may be loaded and executed locally, as part of the productivity application 214, when running on the client device 210. In some cases, however, the NUI engine 106 may be executed remotely from the client device 210. For example, the NUI engine 106 may be executed by the application service 102 or by a third party. In other cases, one or more components or features of the NUI engine 106 may be loaded and executed locally, while other components or features are loaded and executed remotely. For example, as illustrated, the NUI engine 206 includes a user intent module 218, a prompt generator module 220, a content generator 208 (which may be the same or similar to the content generator 108), and a card generator module 222. One or more of these components may be executed locally by the client device 210, while one or more of these components may be executed remotely, by for example a third party or the application service 102. Various scenarios are described below in greater detail.

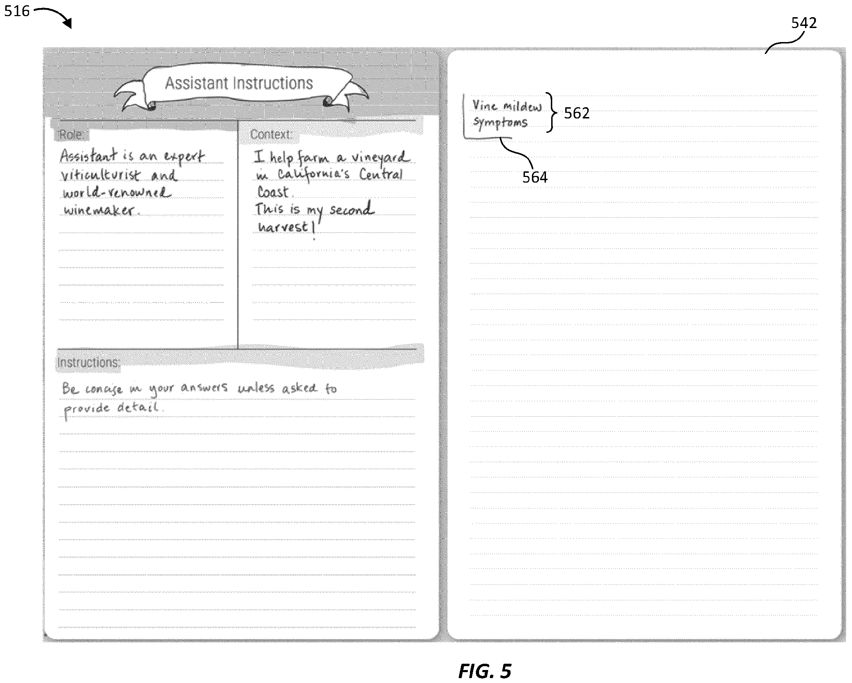

As noted above, the NUI engine 206 includes one or more components that provide various functions of the NUI canvas 216 to a user 228 of the client device 210. That is, when the user 228 interacts with the productivity application 214, the NUI canvas 216 is executed to provide the user with an enhanced NUI experience. In particular, the NUI engine 206 of the NUI canvas 216 is executed to provide the NUI canvas 216 and its related functions to the user 228, as the user navigates and interacts with the productivity application 214. The details of the enhanced NUI experience provided by the NUI canvas 216 are described in greater detail below with respect to Figures 5-17.

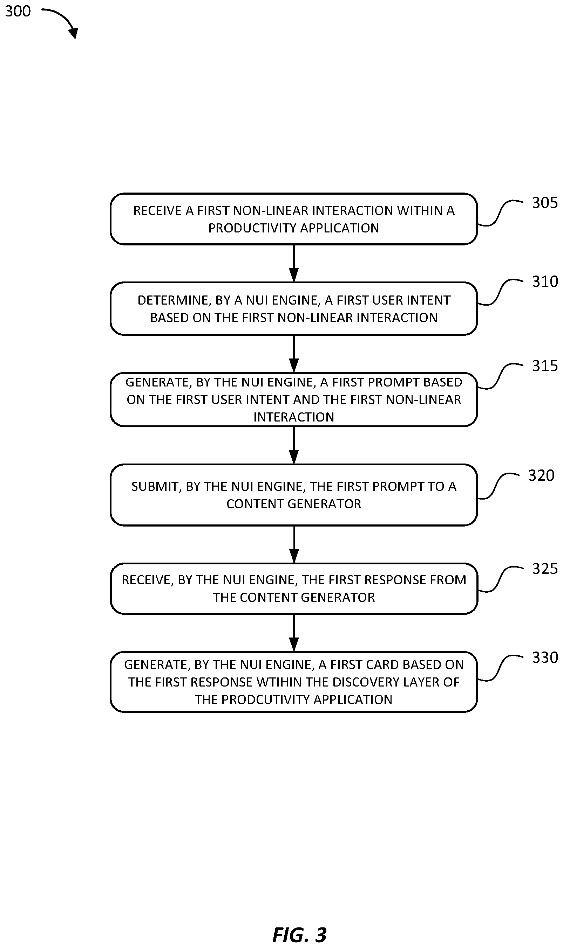

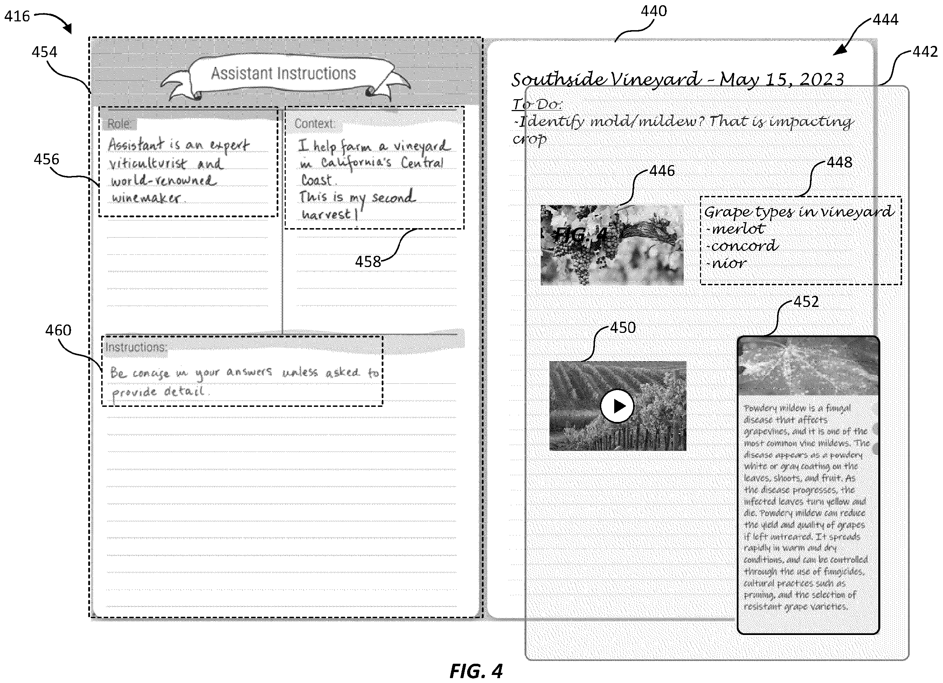

For ease of illustration, the remaining discussion of Figure 2 is made with reference to Figures 3 and 4. **Figure 3** provides an example process 300 for providing a NUI canvas, such as the NUI canvas 216, and its related functions, according to an embodiment herein. **Figure 4** illustrates a GUI of a NUI canvas 416, such as the NUI canvas 216, executed as part of a productivity application, such as the productivity application 214, according to an embodiment herein. Figures 2-4 are described in combination for ease of illustration; however, it should be appreciated the following description is equally applicable to other figures and components provided herein.

Returning now to Figure 2, to provide the user 228 with the enhanced NUI experience, the NUI canvas 216 is executed as part of the productivity application 214. In particular, the NUI canvas 216 includes the NUI engine 206 that monitors the user's 228 interaction with the productivity application 214 to identify non-linear interactions. Non-linear interactions, as used herein, refer to interactions that the user 228 makes with respect to the productivity application 214 that are indirectly made with the intention to elicit a response from the content generator 208. For example, instead of typing, speaking, or otherwise generating a prompt directly to the content generator 208, which would be a linear interaction with the content generator 208, the user 228 interacts with the productivity application 214 and the interactions with the productivity application 214 are parsed to identify interactions that are made with the intention to elicit a response from the content generator 208. These interactions, which are made with respect to the productivity application 214 with the intention to prompt a response from the content generator 208 are "non-linear interactions." In other words, during non-linear interactions, the user 228 does not interact with the content generator 208 directly. Instead, the user 228 interacts with the productivity application 214.

In addition to not interacting with the content generator 208 directly, during non-linear interactions, the user 228 does not prompt the content generator 208. That is, the user 228 does not generate a prompt to submit to the content generator 208 to elicit a response. Instead, the NUI canvas 216, in particular the NUI engine 206, generates the prompt based on the non-linear interaction. Accordingly, non-linear interactions, as referred to herein, are interactions that the user 228 makes with respect to the productivity application 214 that are not directed to the content generator 208 and do not relate to generating a prompt to elicit a response from the content generator 208. Instead, the non-linear interactions are interactions that the user 228 has with respect to the productivity application 214 made within the natural flow of a productivity or creative process. Accordingly, as used herein the phrase "non-linear interactions" are interactions made by the user 228 with respect to any other application except the content generator 208, such as the productivity application 214, from which a prompt for the content generator 208 is generated and the interactions themselves do not generate the prompt or submit the prompt to the content generator 208. Various examples of non-linear interactions are illustrated in greater detail with respect to Figures 5-17.

With reference to Figure 3, to provide the NUI canvas 216, as the user 228 interacts with the productivity application 214, the NUI engine 206 monitors for non-linear interactions and at some point, the NUI engine 206 receives a non-linear interaction within the productivity application 214 (305). The non-linear interaction may be a variety of modes of interactions. For example, the user 228 may draw on a screen corresponding to the client device 210 using a finger or a digital pen, type using a physical or digital keyboard, insert pictures or videos into the productivity application 214, speak or otherwise provide an audio signal, or gesture to content within the productivity application 214.

As can be appreciated, the NUI canvas 216 allows for interactions to expand beyond the conventional prompting interaction of typing a request into a chat box for submission to the content generator 208. Here, the NUI canvas 216 allows the user to speak, thereby generating sound 236, that is captured by a microphone 234. The microphone 234 is operably coupled with the client device 210, such that when the user 228 speaks, the sound 236 is captured by the microphone 234 and used by the productivity application 214 to either generate content objects within the productivity application 214 or captured by the NUI canvas 216 to indicate a non-linear interaction and/or determine a user intent. Similarly, the user 228 may make a gesture 238 with respect to the productivity application 214 that may be captured by a camera 232 (e.g., via a video or image signal) that is operably coupled with the client device 210. The gesture 238 may be identified by the NUI engine 206 to indicate a non-linear interaction and/or determine a user intent. As will be expanded on below, the NUI engine 206 may determine whether a non-linear interaction is meant to invoke the NUI engine 206, thereby having a user intent, based on the context of the non-linear interaction, such as the spatial proximity of content objects (e.g., text, images, videos, cards) to the non-linear interaction.

When the NUI engine 206 receives the non-linear interaction, the NUI engine 206 determines a user intent based on the non-linear interaction (310). The user intent refers to the user 228's intended response that the non-linear interaction is meant to invoke. For example, if the user 228 draws a question mark, then the NUI engine 206 may determine that the user 228's intention by drawing the question mark is to elicit a response from the content generator 208 that provides information on a topic of a content object corresponding to the question mark.

To determine a user intent based on a non-linear interaction, the NUI engine 206 includes the user intent module 218. The user intent module 218 maps non-linear interactions to user intents. In other words, the user intent module 218 may map a first non-linear interaction to a first user intent, thereby eliciting a first response or response type from the content generator 208, and a second non-linear interaction to a second user intent, thereby eliciting a second response or response type from the content generator 208. Following the above question mark example, the user intent module 218 may map the question mark to mean the user 228 wants more information on the associated topic or content object. As such, the user intent module 218 may identify this user intent when a prompt is generated by the NUI engine 206 for the content generator 208. If the user 228, during a second non-linear interaction, groups together two or more content objects (e.g., within text, pictures, videos, audio, cards) within the productivity application 214, the user intent module 218 may determine that the user intent is to generate a summary of the two or more content objects. As such, the user intent module 218 identifies this user intent for the NUI engine 206 for generation a prompt for the content generator 208. Again, examples of user intents and corresponding non-linear interactions, are described in greater detail below with respect to Figures 5-17.

As illustrated, the user intent module 218 may include an interaction database 226. The interaction database 226 may include information on what non-linear interactions map to various user intents. For example, the interaction database 226 may indicate that a question mark corresponds to a user intent for more information and a clustering of content objects corresponds to a user intent to generate a summary of the content objects. As such, when determining a user intent based on a specific non-linear interaction, the user intent module 218 may query the interaction database 226 based on the non-linear interaction to identify a respective user intent.

In some cases, the user intent determined by the user intent module 218 may be based, in part, on the user 228. That is, user intent determined by the user intent module 218 may be specific the user 228. For example, a non-linear interaction involving clustering of content objects made by the user 228 may correspond to a user intent to generate a summary of the content objects; however, the same non-linear interaction (e.g., clustering of content objects) made by another user may correspond to a user intent to create a plan or to-do list.

The user intent module 218 may identify user intents that are specific to an individual user over time and continuously update and learn what actions the user intends to invoke with various non-linear interactions. This may be referred to as an interaction history for a user. In some cases, a user profile 224 may store user intents and their respective non-linear interactions for an individual user. That is, the NUI engine 206 may gather information over time on the user's 228 non-linear interactions and user intents, storing this information in the user profile 224 as part of the user's interaction history. In some cases, consent 230 may be requested from the client device 210 prior to gathering and/or storing information relating to the user's 228 non-linear interactions and user intents. For example, when the user opens the productivity application 214 or downloads software corresponding to the NUI canvas 216, the user may be prompted to provide consent 230 for the NUI engine 206 to observe and store non-linear interaction information relating to the client device 210. By storing information relating to the non-linear interactions and respective user intent, the NUI engine 206 can tailor the NUI canvas experience to the user 228, thereby providing an enhanced and individualized experience.

When the NUI engine 206 identifies a user intent based on the non-linear interaction, the NUI engine 206 generates a prompt based on the user intent and the non-linear interaction (315). The prompt may include a request for a response to be generated by the content generator 208 based on the non-linear interaction. In some cases, the NUI engine 206 includes the prompt generator module 220 that generates prompts based on determined user intents. As such, the prompt generator module 220 may generate a prompt to include a request for a response based on the user intent and the non-linear interaction. In some cases, the prompt generator module 220 determines the context of the non-linear interaction for generation of the prompt. For example, in the above question mark example, the prompt generator module 220 may determine a content object, such as text, corresponding to the question mark, and generate the prompt based on that text and the user intent. That is, if the user 228 draws a question mark next to the phrase "break a leg" within the productivity application 214, the prompt generator module 220 may identify the phrase "break a leg" as context for the user intent of requesting more information. As such, the prompt generator module 220 may generate a prompt requesting the meaning of the phrase "break a leg."

In some cases, the prompt generator module 220 may include the associated content object(s) in the prompt. For example, if the non-linear interaction is a group interaction, such as clustering of two text objects, such as paragraphs, cards, or images containing text, then the prompt generator module 220 may generate the prompt to include the two text objects. If the user intent is to generate a summary, then the prompt may include a request to generate a summary based on the two text objects that are included or referenced within the prompt.

Once the prompt is generated by the prompt generator module 220, the prompt is submitted to the content generator 208 (320). Although the content generator 208 is illustrated as part of the NUI engine 206, it should be appreciated that the content generator 208 may be separate from the NUI engine 206. For example, the content generator 208 may be hosted by the application service 102 or a third party. Responsive to receiving the prompt, the content generator 208 generates a response and provides the response to the NUI engine 206 (325).

Upon receipt of the response, the NUI engine 206 generates a card based on the response (330). In particular the NUI engine 206 generates a card based on the response within a discovery layer of the NUI canvas 216. With reference to Figure 4, an illustrated example of the NUI canvas 416, which may be the same or similar to the NUI canvas 216 provided as part of the productivity application 214 is provided. As shown, the NUI canvas 416 includes a composition layer 440 and a discovery layer 442. The composition layer 440 may be or include the portion of the productivity application 214 in which the user 228 generates content. For example, the user 228 may be a farm hand on a vineyard and may be developing a plan to address issues with the current vineyard crop. As such, the user 228 may keep a journal, including a to-do list 444 within the composition layer 440. In other words, if the productivity application 214 is a word processing application, then the composition layer 440 may be the portion of the productivity application 214 in which the user 228 generates text into.

As illustrated, the discovery layer 442 may overlay the composition layer 440. The discovery layer 442 may be part of the NUI canvas 416 in which the user 228 can brainstorm, ideate, and otherwise generate content as part of his or her productivity or creative process. For example, following the above example, the user 228 inserts an image 446 of a grape vine from the vineyard, a listing 448 of the grape types affected, and a video 450 of the region of the vineyard affected into the discovery layer 442. Since the image 446, the listing 448, and the video 450 contain pertinent information for determining how to address the underlying issue affecting the vines, the user 228 may include those in the discovery layer 442 for reference or otherwise aid in developing of his or her plan to address the issue.

At some point, the user 228 may perform a non-linear interaction, such as drawing a question mark next to the image 446 or asking, "what are common diseases for these?" while gesturing to the listing 448, and the corresponding prompt may be submitted to the content generator 208. Responsive to the prompt, the content generator 208 may provide a response that is used to generate a card 452. The card 452 may be generated by the card generator module 222 based on the response from the content generator 208. Cards are described in greater detail below with respect to Figures 5-17.

As shown, the card 452 is provided as part of the discovery layer 442 that overlays the composition layer 440. The discovery layer 442 overlays the composition layer 440 such that content objects, such as the image 446, the listing 448, the video 450, and the card 452 can be manipulated separate from content objects, such as the to-do list 444, that are part of the composition layer 440. As one can appreciate, the NUI canvas 416 may include numerous "pages" or an extended content generation area, and as such, the user 228 may need to navigate between content by scrolling or otherwise moving to off-screen portions of content. For example, the NUI canvas 416 may include more than 10 pages, each containing respective information relating to tasks to achieve as part of the vineyard farm hand. As such, although the user 228 started researching potential vine diseases on the first page, the user 228 may want to move the card 452 that was respectively generated to a subsequent page. As such, the discovery layer 442 may allow a user to zoom out and view content relating to other areas of the NUI canvas 416 and move content objects between different areas of the discovery layer 442. As can be appreciated, the user 228 may use the discovery layer 442 as a research or creative area to generate and store content objects as he or she generates content within the composition layer 440.

In some embodiments, the discovery layer 442 has a pre-defined or set level of transparency. By being slightly transparent, when the discovery layer 442 overlays the composition layer 440, the user 228 can navigate (e.g., pan, scroll, zoom) through the discover layer 442 while still seeing the content objects present in the composition layer 440 (or vice versa as described below). Additionally, each of the discovery layer 442 and the composition layer 440 can be independently navigated while still seeing content objects present in the stationary layer. For example, when the user 228 navigates through the discovery layer 442, the content objects present in the composition layer 440 remains stationary, while the content objects in the discovery layer 442 moves responsive to the user's 228 navigation. Conversely, the user 228 may navigate through the content objects within the composition layer 440 while seeing the content objects present in the discovery layer 442. As can be appreciated, the user 228 can select which of the discovery layer 442 and the composition layer 440 remains stationary and which is navigated through.

By overlaying the discovery layer 442 in a transparent manner over the composition layer 440, while allowing independent navigation between the layers 440 and 442, the user 228 can utilize the full real estate of his or her screen and drop or promote content objects between layers to a precise location with minimal or no drag/ drop. Additionally, the overlaying of the discovery layer 442 and the composition layer 440 reduces context switching often required of side-by-side windows approach (the conventional approach) of viewing content from two different layers/windows.

In some cases, the NUI canvas 416 may include a template 454 to aid in the enhanced NUI experience. The template 454 may be a portion of the NUI canvas 416 in which the user 228 can define prompting instructions or parameters for the NUI engine 206. For example, as illustrated, the template 454 may include a role parameter 456, a context parameter 458, and an instructions parameter 460. In the illustrated example, the user 228 instructs the NUI engine 206 to provide the role of an assistant that is an expert viticulturist and world-renowned winemaker as the role parameter 456. For the context parameter 458, the user 228 provides the information that he or she works at a vineyard in California's Central Coast and that it is his or her second year on the job. Such context lets the NUI engine 406 know that the user 228 is relatively new to this subject area and as such may need a bit more information. Finally, the user 228 provides the instructions that the NUI engine 206 should be concise in its answers unless asked to provide detail for the instructions parameter 460. The instructions provided as part of the template 454 are used by the NUI engine 206 to generate prompts based on non-linear interactions made within the NUI canvas 416. In other words, whenever the user 228 makes a non-linear interaction within the NUI canvas 416, and NUI engine 206 identifies a user intent for generating a prompt, the prompt includes the underlying instructions and context provided as part of the template 454.

As can be appreciated, although the template 454 includes the role parameter 456, the context parameter 458, and the instructions parameter 460, other parameters may be included or omitted from the template 454, depending on the type of parameter. Additionally, although the template 454 is illustrated as part of the NUI canvas 416, the template 454 may be provided to the user 228 for input in a variety of manners. For example, when the user 228 opens a new document within the productivity application 214, the user 228 may be provided with a template 454 for providing instructions to the NUI engine 206 for that document.

Turning now to Figures 5-17, various features and functions of the NUI canvas are illustrated following the vineyard assistant example of Figure 4. For ease of illustration, the following discussion is made with reference to Figure 2, however, it should be appreciated that components from any other figures are equally applicable.

Starting with **Figure 5**, Figure 5 illustrates a non-linear interaction made within an example NUI canvas 516, according to an embodiment herein. The NUI canvas 516 may be the same or similar to the NUI canvas 416. The NUI canvas 516 may be executed as part of a productivity application, such as the productivity application 214. At some point, a user, such as the user 228, generates an object content 562 within the NUI canvas 516. Specifically, the user 228 generates the object content 562 within a discovery layer 542 within the NUI canvas 516.

In the illustrated example, the object content 562 is text that the user 228 wrote in the NUI canvas 516, by for example, handwriting with a digital stylus or a finger. In other embodiments, the user 228 may generate the object content 562 by typing, pasting, or using speech-to-text to generate the text of the object content 562. In other scenarios, instead of text, the object content 562 may be an image, a video, or a sound clip.

As shown, the user 228 draws a mark 564 around the object content 562. Based on the spatial proximity of the mark 564 (e.g., the closeness of the mark 564 to the object content 562), a NUI engine, such as the NUI engine 206, may determine the mark 564 to be a non-linear interaction. In some cases, the NUI engine 206 may determine the mark 564 to be a non-linear interaction meant to invoke a response from a content generator, such as the content generator 208, because the mark 564 corresponds to a pre-defined mark meant to indicate a non-linear interaction. As can be appreciated, in some cases, various marks may carry predefined meanings to indicate a non-linear interaction and invoke a respective user intent, while in other cases, marks may be assigned by a user.

Upon receiving the non-linear interaction, here, the mark 564, the NUI engine 206 determines a user intent based on the non-linear interaction. As described above with respect to Figure 2, the user intent module 218 may determine an associated user intent for the mark 564. In the illustrated example, the user intent module 218 may determine that the user intent is to learn more about vine mildew symptoms based on the object content 562 and the mark 564. The user intent module 218 may also determine the user intent based, in part, on the information provided as part of the template 454.

Based on the user intent and the non-linear interaction, the NUI engine 206 may generate a prompt. For example, the prompt generator module 220 may generate a prompt based on the user intent and the non-linear interaction. Here, the prompt may include a request for the symptoms of vine mildew. The prompt may be submitted to the content generator 208, which may in turn provide a response to the prompt. Once the response is received, the NUI engine 206 generates a card based on the response.

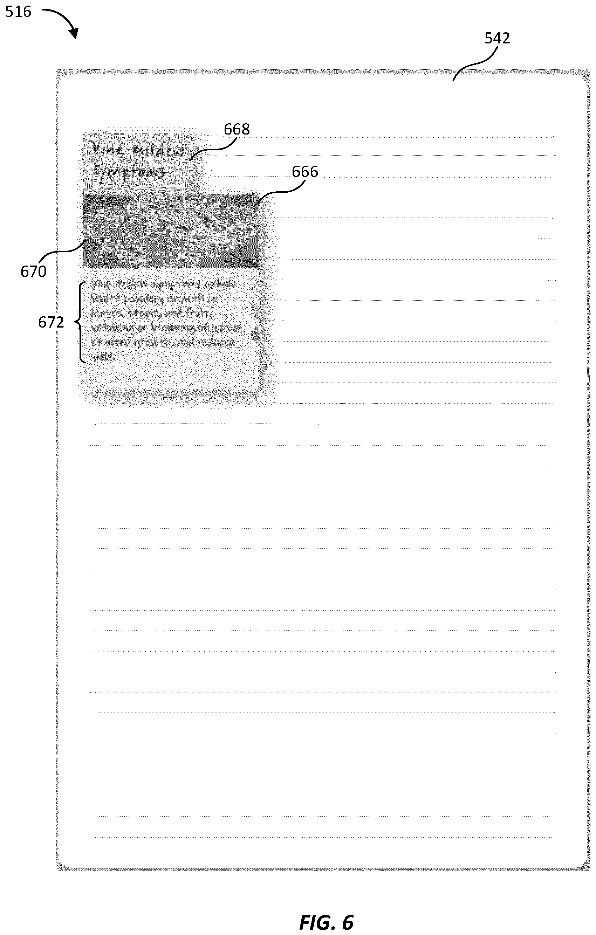

Turning now to **Figure 6**, an example card 666 generated by a NUI engine 206 based on the mark 564 (e.g., the non-linear interaction) is illustrated, according to an embodiment herein. As shown, the card 666 includes information that was generated as part of response to the prompt submitted by the NUI engine 206. Specifically, the card 666 includes text 672 and an image 670 that provides more information on vine mildew symptoms, as indicated by the object content 562. The card 666, once generated, is provided to the user 228 within the productivity application 214 as part of the discovery layer 542.

As shown, the card 666 is generated based off of a response provided by the content generator 208 responsive to the prompt submitted by the NUI engine 206. As such, the card 666 may include context 668 relating to the object content 562 on which the card 666 is based. As illustrated, the card 666 includes text 672 and an image 670. In some cases, the card 666 may include additional information in various formats, such as text, images, videos, and/or audio clips, depending on the prompt and user intent. In some cases, the card 666 may include more information than is illustrated, while in other cases, the card 666 may include less information than is illustrated. In an example, the user 228 may click or otherwise select the image 670 and another image may be provided. In this manner, the card 666 may allow the user to navigate or scroll through other images from the single card 666.

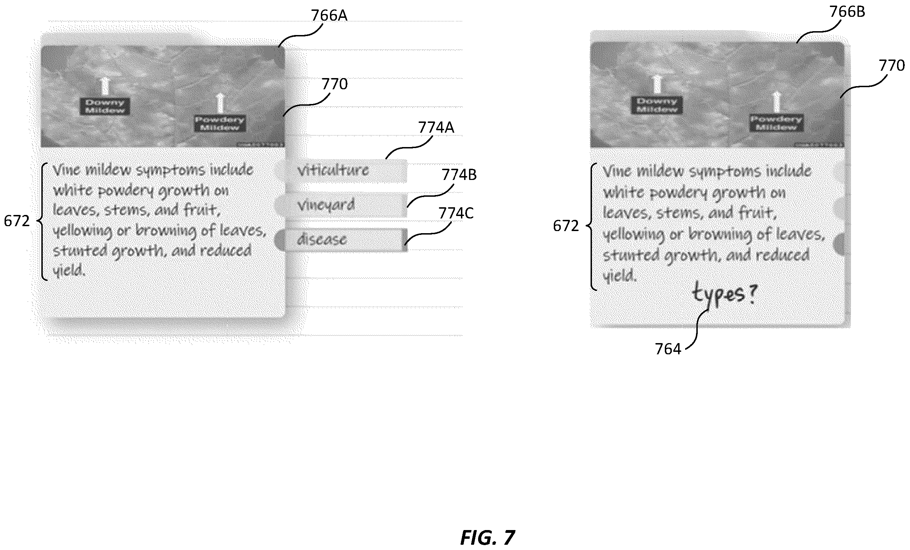

Referring now to **Figure 7**, variations of the card 666 generated by the NUI engine 206 are illustrated, according to embodiments herein. In particular, card 766A and card 766B are illustrated. The cards 766A and 766B may be the same or similar to the card 666, except at a different moment in time. For example, for card 766A, the user 228 may have clicked on the image 670, which may have switched the image 670 to the image 770. Similarly, the image 670 from card 666 switched to the image 770 for the card 776B, while the text 672 remained the same for both cards 766A and 766B. For card 766A, the user 228 may select or place his or her cursor over the card 766A and be provided with keywords 774A, 744B, and 744C. The keywords 744A-C may be part of the keywords used by the content generator 208 for generation of the card 666 (and 766A-B). As shown, the keywords 774A-C may pull out from the card 766A when a user selects or places a cursor over the card 766A.

In some cases, the user 228 can select one of the keywords 774A-C and be provided with a respective card. For example, if the user 228 selects the keyword 774C, the NUI engine 206 may generate a prompt based on the selection of the keyword 774C, which would be a non-linear interaction, determine based on the selection that the user 228 desires more information on this topic in the context of the card 766A, generate a prompt based on the selection and the context of the selection (e.g., the card 766A and the keyword 774C), and submit the prompt to the content generator 208 for a response. Once the response is received, a subsequent card (not shown) may be provided on the discovery layer 542 of the productivity application 214.

When reviewing the card 766B, the user 228 may desire to learn more about the types of mildews that affect vines. As such, the user 228 may write, using a stylus or finger, "types?" on the card or otherwise make a mark 764 on the card 766B. Because the mark 764 is written directly on the card 766B the NUI engine 206 identifies the mark 764 as a non-linear interaction, determines a user intent based on the non-linear interaction, and generates a prompt for submission to the content generator 208.

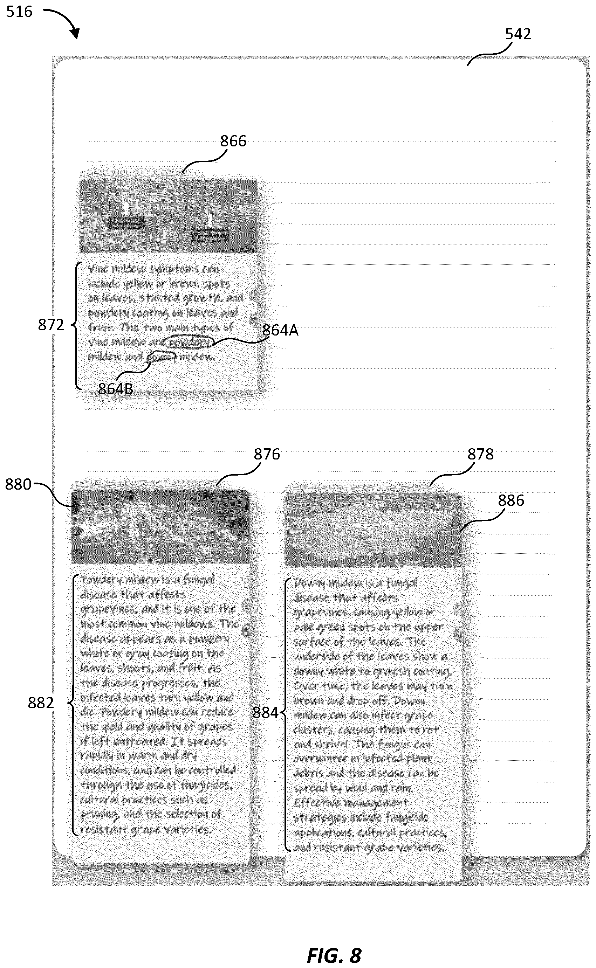

Referring now to **Figure 8**, additional cards generated by the NUI engine 206 are illustrated, according to embodiments herein. In particular, a card 866 is generated by the NUI engine 206 responsive to the mark 764 made by the user 228 on the card 766B. As shown, text 872 of the card 866 corresponds to the text 672 of the card 766B that is regenerated to provide the two main types of vine mildew. The NUI engine 206 regenerated the text 672 as the text 872 to include the two main types of vine mildew based on the user 228 typing the mark 764, which requested to learn more about the types of mildew affecting vines.

When reading the card 866, the user 228 may desire to learn more about the two main types of mildew. As such the user 228 may circle the terms "powdery" and "downy" via making marks 864A and 864B, respectively. Each of the marks 864A and 864B are non-linear interactions that the NUI engine 206 may receive and identify a corresponding user intent for. Responsive to each of the marks 864A and 864B, the NUI engine 206 generates a card 876 and a card 878, respectively. As shown, the card 876 provides text 882 describing powdery mildew and the card 878 provides text 884 describing downy mildew. The card 876 also provides an image 880 and the card 878 provides an image 886, each illustrating the respective type of vine mildew.

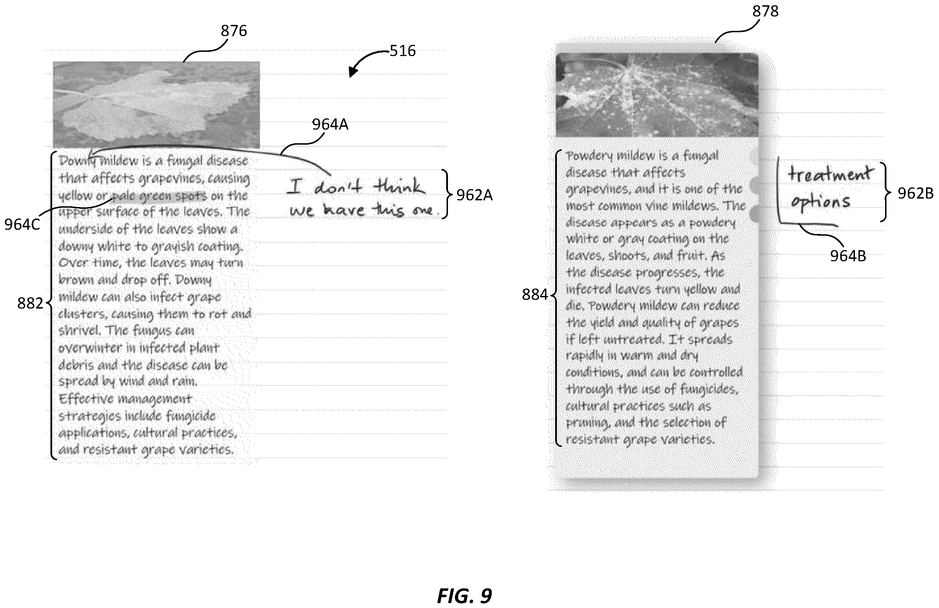

Referring now to **Figure 9**, additional non-linear interactions with cards generated by the NUI engine 206 are illustrated, according to an embodiment herein. In particular, Figure 9 illustrates non-linear interactions that the user 228 makes with respect to the cards 876 and 878. For example, the user 228 may make a note 962A by writing in the NUI canvas 516 and drawing a mark 964A (here an arrow) to indicate that this isn't the type of disease present in his or her vineyard. The user 228 may also make another mark 964C, such as highlighting a portion of the text 882. Based on the temporal proximity of the marks 964A and 964C, and the note 962A, NUI engine 206 may determine that they are related and thus determine a user intent based on all of these non-linear interactions. That is, because the user 228 highlights the portion of the text 882 with the mark 964C noting that pale green spots and then writes "I don't think we have this one" in the note 962A with an arrow (mark 964A) pointed to downy mildew all within a short time period (e.g., within a few seconds of each other), the NUI engine 206 may determine that the marks 964A and 964C, and the note 962A are related.

The NUI engine 206 may perform an optical character recognition (OCR) process or an image-to-text process on the note 962A to determine the user intent for the marks 994A and 964C. Since the note 962A says that the user 228 doesn't think this is related to the type of disease affecting his or her vines, the NUI engine 206 may determine that the user intent is to eliminate downy mildew from any further research. As such, the NUI engine 206 may use this information for subsequent prompting of the content generator 208, such as for example, narrowing subsequent prompt requests to exclude anything related to downy mildew, unless the user 228 directly requests to include it.

With respect to the card 878, the user may write a note 962B and make a mark 964B around the note 962B. Based on the note 962B and the mark 964B, the NUI engine 206 may determine that the user intent is to learn about treatment options to treat powdery mildew. As noted above, the NUI engine 206 may generate a prompt based on the context of the card 878, such as the text 884, and the note 962B. Responsive to receiving such a prompt, the content generator 208 may generate a card providing the treatment options for powdery mildew.

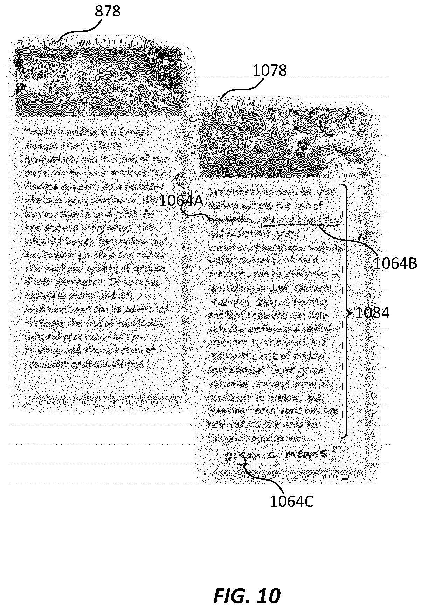

Turning now to **Figure 10**, Figure 10 illustrates a card 1078 generated responsive to the mark 964B received by the NUI engine 206, according to an embodiment herein. As shown, the card 1078 includes text 1084 describing the treatment options for powdery mildew. The NUI engine 206 generated the card responsive to receiving the mark 964B on the card 878, as described in Figure 9. When reading the text 1084, the user 228 indicates that he or she does not want treatment options that include fungicides via mark 1064A. Directly after making the mark 1064A, the user 228 makes a mark 1064B to underline cultural practices. As such, the NUI engine 206 may receive each of these non-linear interactions (e.g., the marks 1064A-B) and determine that the user 228 wants to exclude treatment options that include fungicides and focus on treatment options that relate to cultural practices.

The user also makes a mark 1064C on the card 1078 which writes "organic means?". Based on the marks 1064A-C, the NUI engine 206 determines the user intent for a subsequent prompt is to generate a card that focuses on organic treatment options that relate to cultural practices but excludes fungicides for treating powdery mildew on vines. As is illustrated by marks 1064A-C, the NUI engine 206 may determine user intent based on a culmination of non-linear interactions. That is, as the user 228 continues through a productivity or creative process, the NUI engine 206 may gather information relating to the user's 228 process and include such information in subsequent prompting of the content generator 208. Here, the NUI engine 206 includes information gathered from the non-linear interactions with the cards 766B, 866, 876, 878, and 1078 to determine the user intent(s) for the marks 1064A, 1064B, and 1064C. Responsive to determining the user intent(s) for the marks 1064A-C, the NUI engine 206 regenerates the card 1078 or generates a new card.

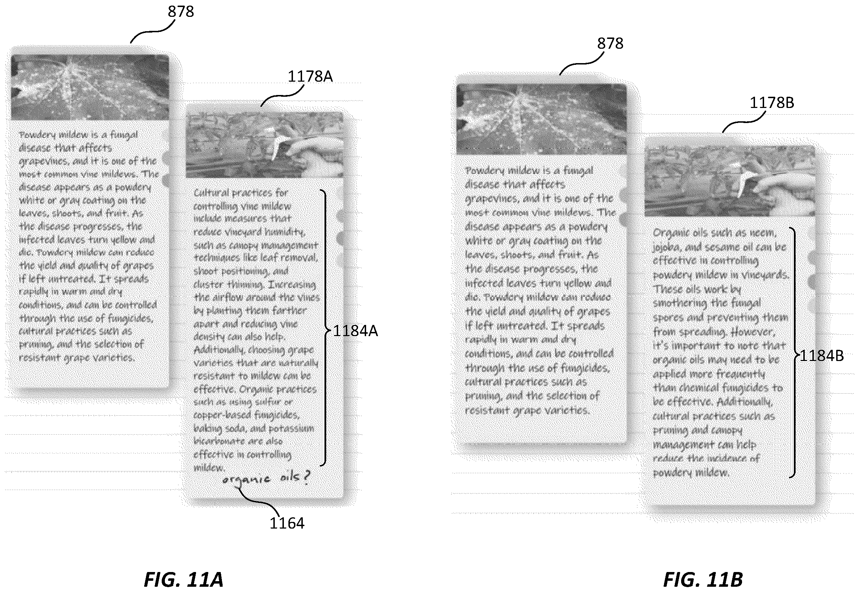

Referring now to **Figures 11A** and **11B**, additional examples of non-linear interactions and subsequently generated cards are illustrated, according to an embodiment herein. For example, as illustrated by Figure 11A, a card 1178A is generated based on the card 1078 and the marks 1064A-C. Specifically, the text 1084 of the card 1078 is regenerated as text 1184A for the card 1178. The text 1184A now describes cultural and organic practices for treating powdery mildew of vines. Upon reading the text 1184A, the user 228 may remember that organic oils are a preferred method of treatment at his or her vineyard, and as such makes a mark 1164 on the card 11 78A. As shown, the mark 1164 writes "organic oils?".

As illustrated by Figure 11B, responsive to receiving the mark 1164, the NUI engine 206 determines the user intent of requesting cultural and organic treatment options of powdery mildew that include organic oils. As such, the NUI engine 206 generates card 1178B that includes text 1184B describing such treatment options including organic oils. As illustrated, the text 1184A is regenerated as text 1184B on the card 1178B to focus on organic oil treatment options.

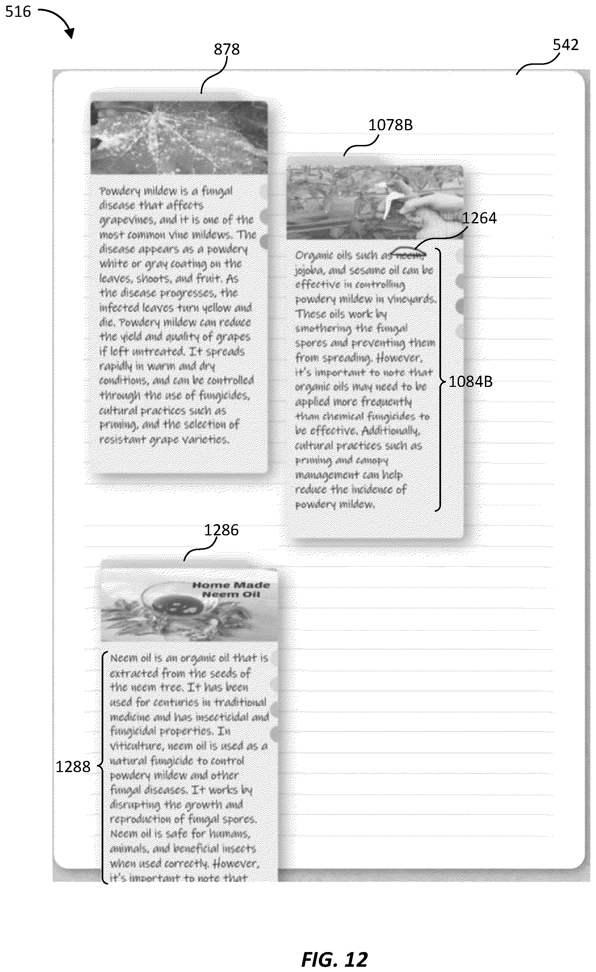

Referring now to **Figure 12**, another non-linear interaction and a respectively generated card are illustrated, according to an embodiment herein. That is, upon reading the text 1084B of the card 1078B, the user 228 may circle the term "neem" with mark 1264. The NUI engine 206 identifies the mark 1264 as a non-linear interaction with a user intent to learn more about organic oil treatments of powdery mildew that include neem oil. As such, the NUI engine 206 generates a new card 1286 containing text 1288 describing how neem oil is used to treat powdery mildew of vines. As illustrated, the card 1286 is generated in the discovery layer 542 of the NUI canvas 516.

As can be seen, beyond determining a user intent when it comes to what type of response the user 228 wants from the content generator 208, the NUI engine 206 also determines the user intent on how the response is provided within the NUI canvas 516. For example, when the user made the mark 1164 on the card 1178A that included the note "organic oils?" in Figure 11A, the NUI engine 206 determined that the user intent was to rewrite the text 1184A to focus on organic oils. As such, the NUI engine 206 regenerated the text 1184A as the text 1184B.

Here, however, when the user 228 circled the term neem with the mark 1264, the NUI engine 206 determined that the user intent was to generate a whole new card describing neem oil. As such, the NUI engine 206 generated the card 1286 separate from the card 1078B. As can be appreciated, the user 228 may find it helpful to keep both the card 1078B and the card 1286 during his or her research.

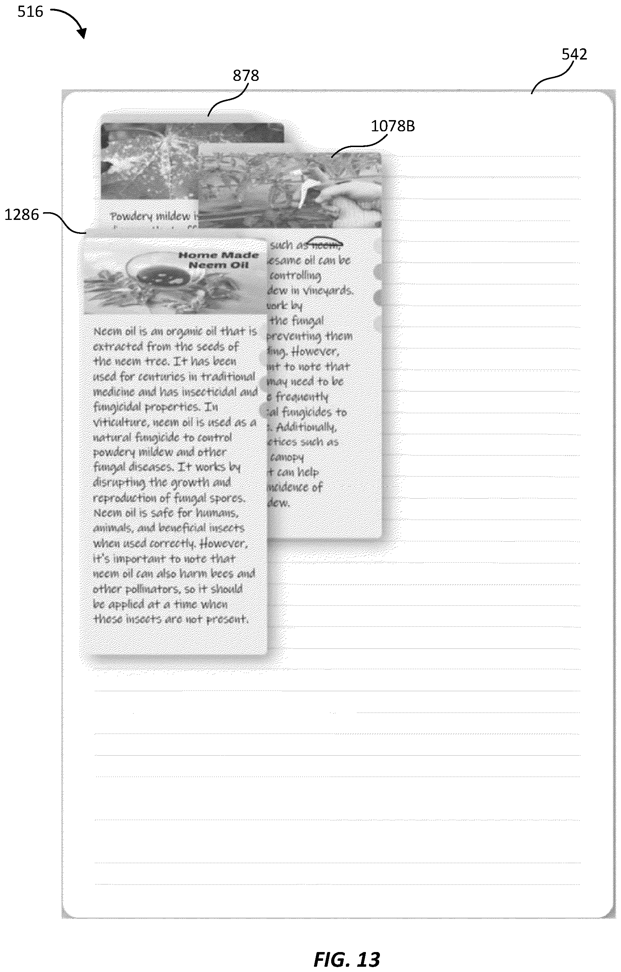

Referring now to **Figure 13**, a group interaction within the NUI canvas 516 is illustrated, according to an embodiment herein. As illustrated, the user 228 may cluster the cards 878, 1078B, and 1286 together within the discovery layer 542 of the NUI canvas 516. The NUI engine 206 may identify the clustering of the cards 878, 1078B, and 1286 as a group interaction. The group interaction is a non-linear interaction and, as such, the NUI engine 206 may determine a user intent based on the group interaction. For example, in some cases, the user intent for a group interaction may be to generate a summary of the content of the cards 878, 1078B, and 1286. In another example, the user intent for the group interaction may be to generate an essay, create an action plan or to-do list, or tell a story. As described above, the user intent for a specific non-linear interaction may be determined based on a predefined correlation between non-linear interaction and user intent or based on the user 228.

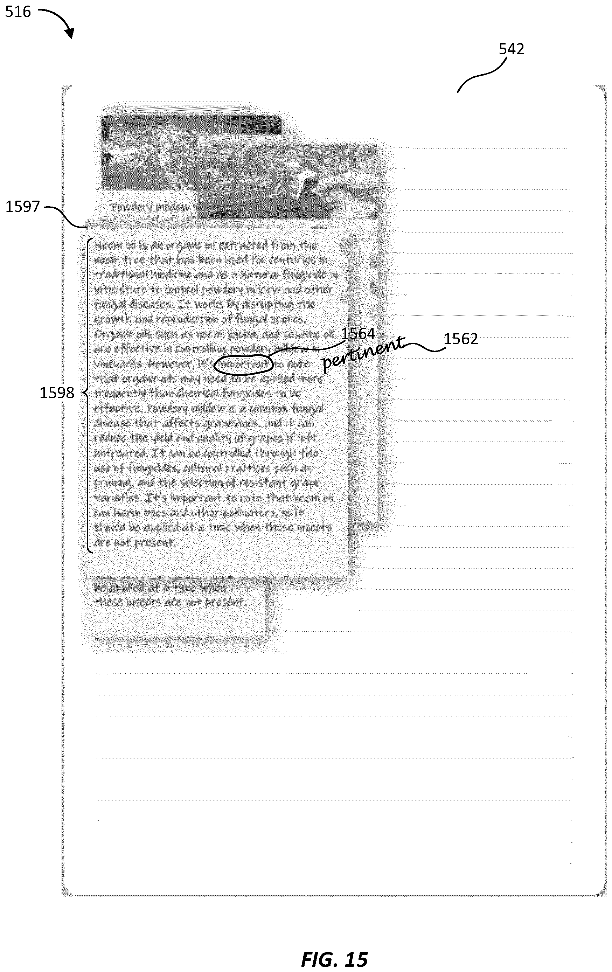

Here, the NUI engine 206 may determine that the user intent for the user 228 is to generate a summary of the cards 878, 1078B, and 1286. As such, the NUI engine 206 may generate a summary, as will be described in detail with respect to Figure 15.

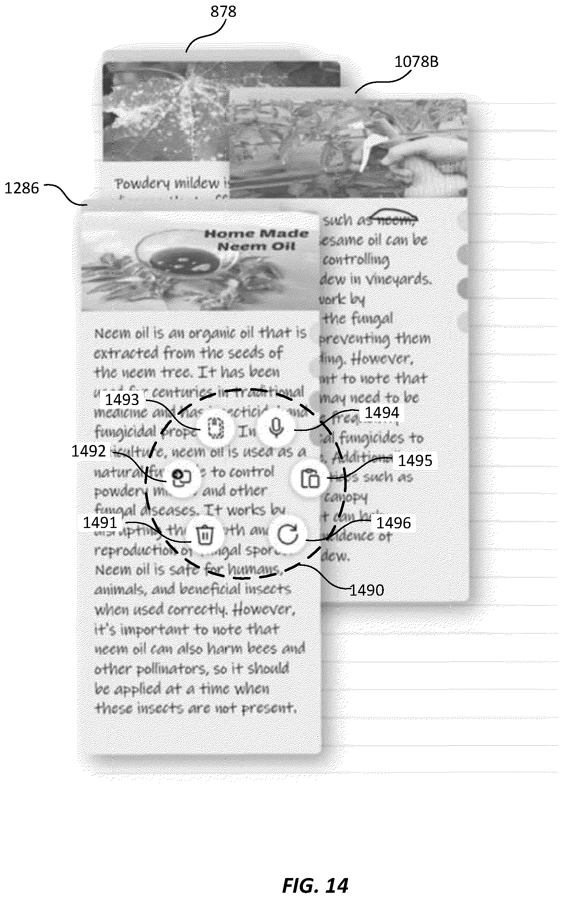

In some cases, instead of determining a user intent based on the group interaction, the user 228 may be provided with one or more options responsive to the group interaction. Referring now to **Figure 14**, example options 1490 provided to the user 228 responsive to the grouping interaction are illustrated, according to an embodiment herein. As illustrated, when the cards 878, 1078B, and 1286 are clustered together, the options 1490 are provided. The options 1490 may include a variety of options for the group interaction. For example, the options 1490 may include a discard option 1491, a combine option 1492, a paste option 1493, a microphone option 1494, a copy option 1495, and an undo option 1496. As can be appreciated, the discard option 1491 discards or deletes the cards 878, 1078B, and 1286, the combine option 1492 combines the cards 878, 1078B, and 1286 into a single card, the paste option 1493 pastes an option that is in a respective clipboard into the cards 878, 1078B, and 1286, the microphone 1494 enables the microphone to receive any verbal commands that the user 228 wishes to provide, the copy option 1495 copies the cards 878, 1078B, and 1286, and the undo option 1496 undoes the group interaction (here, clustering) of the cards 878, 1078B, and 1286. One or more of these options may be omitted and/or additional options may be included in the options 1490.

Referring now to **Figure 15**, a summary card 1597 generated based on the group interaction of Figure 13 is illustrated, according to an embodiment herein. As shown, responsive to receiving the group interaction of clustering the cards 878, 1078B, and 1286, the NUI engine 206 generates the summary card 1597. The summary card 1597 includes text 1598 that summarizes the texts 884, 1084, and 1288. When reading the text 1598, the user 228 may want to edit the word "important" to "pertinent." As such, the user 228 may circle the word "important" with a mark 1564 and write a note 1562 that states "pertinent." The NUI engine 206 may receive the mark 1564 as a non-linear interaction and determine a user intent based on the spatial and temporal proximity of the mark 1564 with the note 1562. As such, the NUI engine 206 may determine that the user 228 wants to replace the term "important" with the term "pertinent" within the text 1598. As such, the NUI engine 206 may generate a prompt requesting that the content generator 208 regenerate the text 1598 accordingly.

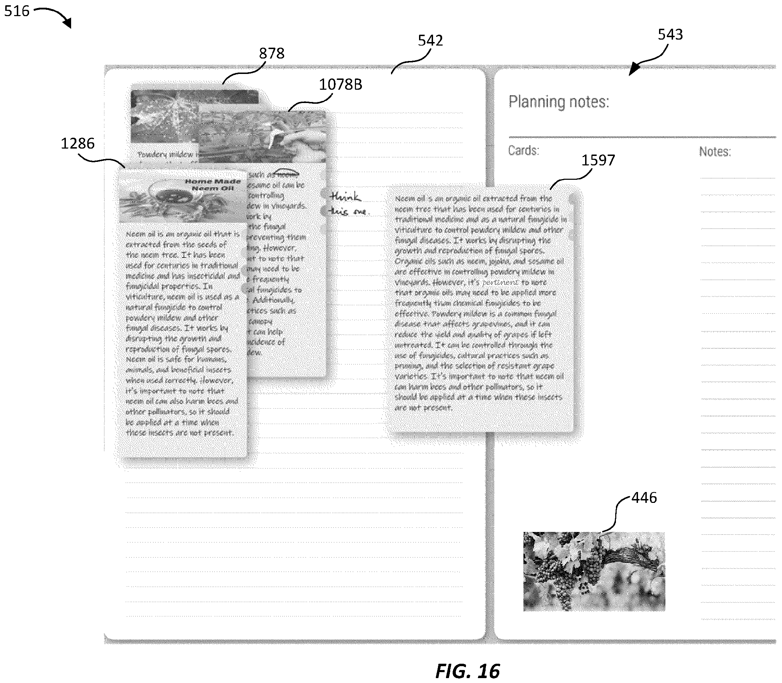

Referring now to **Figure 16**, moving of the summary card 1597 within the discovery layer 542 is illustrated, according to an embodiment herein. Once the summary card 1597 is generated, the user 228 may determine that his or her research flow is nearly complete. As such, the user 228 may want to generate content within the composition layer 540 of the NUI canvas 516. Prior to generating content within the composition layer 540, the user 228 moves the summary card 1597 to a planning notes section 543 of the NUI canvas 516. As described above, the discovery layer 542 allows the user 228 to move and organize cards and other content objects, such as the image 446, within the NUI canvas 516.

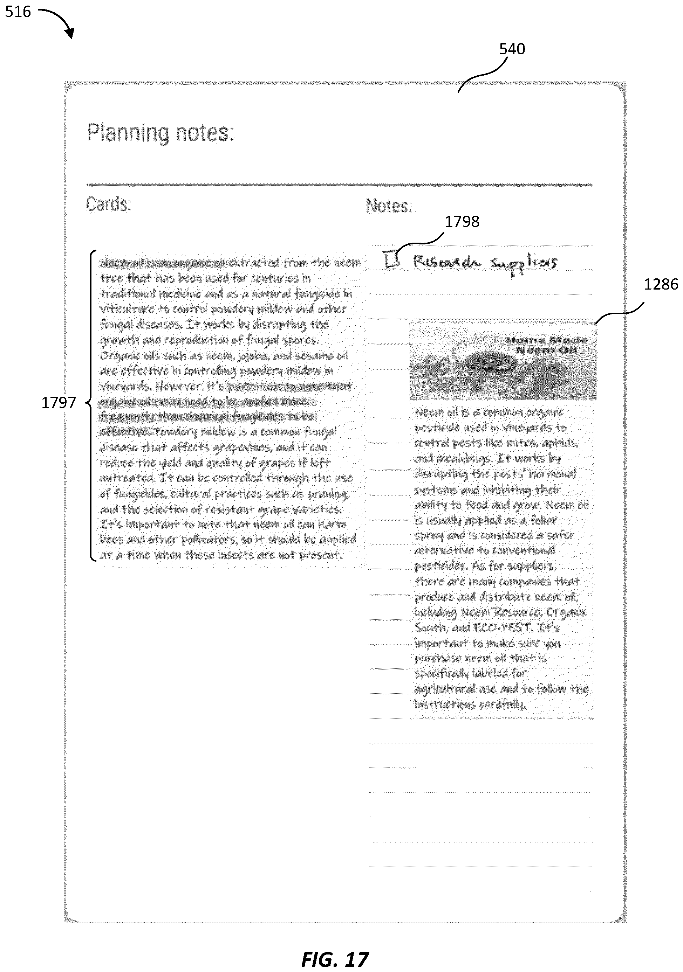

Referring now to **Figure 17**, generation of content within the composition layer based off of a card is illustrated, according to an embodiment herein. In particular, the user 228 may generate content 1797 within the composition layer 540 based on the summary card 1597. The content 1797 may be the same as the summary card 1597 except that the user 228 indicates to the NUI canvas 216 that the summary card 1597 should be moved to the composition layer 540. Moving the summary card 1597 to the composition layer 540, thereby creating content 1797, may change the format of the information within the summary card 1597, the arrangement, or may pin the position of the summary card 1597 within the composition layer 540 of the NUI canvas 516.

Once the content 1797 is generated in the composition layer 540, the content 1797 may remain fixed in position. For example, if the user was to pan out within the discovery layer 542 the card 1286 may move accordingly while the content 1797 remains fixed. In addition to the content 1797, the user 228 may also make notes 1798 in the composition layer 540 of additional items to research. In the same manner that the user 228 moves the summary card 1597 into the composition layer 540, thereby creating the content 1797, the user 228 may move the content 1797 back to the discovery layer 542, thereby recreating the summary card 1597. As should be appreciated, the user 228 may desire to rearrange object contents within the NUI canvas 516 or may desire to update the summary card 1597 based on new information as his or her productivity or creativity flow progresses.

Referring to **Figure 18**, Figure 18 illustrates a computing system 1801 that may be used for providing an enhanced NUI canvas and related functions, as described herein. For example, the client device 110 may be or include the computing system 1801. As illustrated, the computing system 1801 includes a processing system 1802 that includes a microprocessor and other circuitry that retrieves and executes software 1805 from storage system 1803. The processing system 1802 may be implemented within a single processing device but may also be distributed across multiple processing devices or sub-systems that cooperate in executing program instructions. Examples of the processing system 1802 include general purpose central processing units, graphical processing units, application specific processors, and logic devices, as well as any other type of processing device, combinations, or variations thereof.

The storage system 1803 may comprise any computer readable storage media readable by processing system 1802 and capable of storing software 1805. The storage system 1803 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations the storage system 1803 may also include computer readable communication media over which at least some of the software 1805 may be communicated internally or externally. The storage system 1803 may be implemented as a single storage device but may also be implemented across multiple storage devices or sub-systems co-located or distributed relative to each other. The storage system 1803 may comprise additional elements, such as a controller capable of communicating with the processing system 1802 or possibly other systems.

The software 1805, including NUI canvas process 1806 (which may be the same or similar to the process 300), may be implemented in program instructions and among other functions may, when executed by the processing system 1802, direct the processing system 1802 to operate as described with respect to the various operational scenarios, sequences, and processes illustrated herein. For example, the software 1805 may include program instructions for implementing the NUI engine and related functions, such as the process 300 illustrated in Figure 3.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. The software 1805 may include additional processes, programs, or components, such as operating system software, virtualization software, or other application software. The software 1805 may also comprise firmware or some other form of machine-readable processing instructions executable by the processing system 1802.

In general, the software 1805 may, when loaded into the processing system 1802 and executed, transform a suitable apparatus, system, or device (of which computing system 1801 is representative) overall from a general-purpose computing system into a special-purpose computing system customized to support NUI canvas features, functionality, and user experiences. Indeed, encoding the software 1805 on the storage system 1803 may transform the physical structure of the storage system 1803. The specific transformation of the physical structure may depend on various factors in different implementations of this description. Examples of such factors may include, but are not limited to, the technology used to implement the storage media of the storage system 1803 and whether the computer-storage media are characterized as primary or secondary storage, as well as other factors.

For example, if the computer readable storage media are implemented as semiconductor-based memory, the software 1805 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 1807 may include communication connections and devices that allow for communication with other computing systems (not shown) over communication networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between the computing system 1801 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

While some examples of methods and systems herein are described in terms of software executing on various machines, the methods and systems may also be implemented as specifically-configured hardware, such as field-programmable gate array (FPGA) specifically to execute the various methods according to this disclosure. For example, examples can be implemented in digital electronic circuitry, or in computer hardware, firmware, software, or in a combination thereof. In one example, a device may include a processor or processors. The processor comprises a computer-readable medium, such as a random access memory (RAM) coupled to the processor. The processor executes computer-executable program instructions stored in memory, such as executing one or more computer programs. Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example one or more non-transitory computer-readable media, which may store processor-executable instructions that, when executed by the processor, can cause the processor to perform methods according to this disclosure as carried out, or assisted, by a processor. Examples of may include, but are not limited to, an electronic, optical, magnetic, or other storage device capable of providing a processor, such as the processor in a web server, with processor-executable instructions. Other examples of non-transitory computer-readable media include, but are not limited to, a floppy disk, CD-ROM, magnetic disk, memory chip, ROM, RAM, ASIC, configured processor, all optical media, all magnetic tape or other magnetic media, or any other medium from which a computer processor can read. The processor, and the processing, described may be in one or more structures, and may be dispersed through one or more structures. The processor may comprise code to carry out methods (or parts of methods) according to this disclosure.

Examples are described herein in the context of systems and methods for providing an enhanced NUI canvas and related functions. Those of ordinary skill in the art will realize that the foregoing description is illustrative only and is not intended to be in any way limiting. Reference is made in detail to implementations of examples as illustrated in the accompanying drawings. The same reference indicators will be used throughout the drawings and the following description to refer to the same or like items.

Additionally, the foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the spirit and scope of the disclosure. In the interest of clarity, not all of the routine features of the examples described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another.

Reference herein to an example or implementation means that a particular feature, structure, operation, or other characteristic described in connection with the example may be included in at least one implementation of the disclosure. The disclosure is not restricted to the particular examples or implementations described as such. The appearance of the phrases "in one example," "in an example," "in one implementation," or "in an implementation," or variations of the same in various places in the specification does not necessarily refer to the same example or implementation. Any particular feature, structure, operation, or other characteristic described in this specification in relation to one example or implementation may be combined with other features, structures, operations, or other characteristics described in respect of any other example or implementation.

Use herein of the word "or" is intended to cover inclusive and exclusive OR conditions. In other words, A or B or C includes any or all of the following alternative combinations as appropriate for a particular usage: A alone; B alone; C alone; A and B only; A and C only; B and C only; and A and B and C.

### EXAMPLES

These illustrative examples are mentioned not to limit or define the scope of this disclosure, but rather to provide examples to aid understanding thereof. Illustrative examples are discussed above in the Detailed Description, which provides further description. Advantages offered by various examples may be further understood by examining this specification.

As used below, any reference to a series of examples is to be understood as a reference to each of those examples disjunctively (e.g., "Examples 1-4" is to be understood as "Examples 1, 2, 3, or 4").

Example 1 is a system comprising: one or more computer readable storage media; one or more processors operatively coupled with the one or more computer readable storage media; and an application comprising program instructions stored on the one or more computer readable storage media that, when executed by the one or more processors, direct a computing system to at least: receive, from a client device, a first non-linear interaction within a productivity application, wherein the productivity application comprises a composition layer and a discovery layer; determine, by a natural user interface (NUI) engine, a first user intent based on the first non-linear interaction; generate, by the NUI engine, a first prompt based on the first user intent and the first non-linear interaction; submit, by the NUI engine, the first prompt to a content generator, wherein the first prompt requests a first response from the content generator based on the first non-linear interaction; receive, by the NUI engine, the first response from the content generator; and generate, by the NUI engine, a first card based on the first response within the discovery layer of the productivity application, wherein the discovery layer overlays on to the composition layer.

Example 2 is the system of any previous or subsequent Example, wherein the discovery layer comprises one or more content objects and the program instructions further direct the computing system to: determine, by the NUI engine, spatial proximity of the first non-linear interaction to the one or more content objects; and determine, by the NUI engine, the first user intent based on the spatial proximity of the first non-linear interaction.

Example 3 is the system of any previous or subsequent Example, wherein the discovery layer comprises one or more content objects and the program instructions to generate, by the NUI engine, the first prompt based on the first user intent based on the first non-linear interaction cause, when executed by the one or more processors, to further direct the computing system to: determine, by the NUI engine, that the first non-linear interaction is made with respect to a first content object of the one or more content objects; and generate, by the NUI engine, the first prompt based on the first user intent and the first content object.

Example 4 is the system of any previous or subsequent Example, wherein the program instructions further direct the computing system to: receive, from the client device, a second non-linear interaction within the productivity application temporally proximate to the first non-linear interaction; determine, by the NUI engine, that the first non-linear interaction and the second non-linear interaction are related based on their temporal proximity; determine, by the NUI engine, the first user intent based on the first non-linear interaction and the second non-linear interaction; determine, by the NUI engine, respective content object that each of the first non-linear interaction and the second non-linear interaction were directed to; and generate, by the NUI engine, the first prompt based on the first user intent and the respective content object.

Example 5 is the system of any previous or subsequent Example, wherein the program instructions further direct the computing system to: determine, by the NUI engine, respective content object to which the first non-linear interaction is directed to; perform, by the NUI engine, optical character recognition (OCR) on the respective content object to identify respective text; and generate, by the NUI engine, the first prompt based on the first user intent and the respective text.

Example 6 is the system of any previous or subsequent Example, wherein: the first non-linear interaction comprises clustering of two or more content objects to be within spatial proximity of one another within the productivity application; and the program instructions to determine, by the NUI engine, the first user intent based on the first non-linear interaction cause, when executed by the one or more processors, to further direct the computing system to: determine, by the NUI engine, a group interaction intent based on the clustering of the two or more content objects and the client device.

Example 7 is a method comprising: receiving, from a client device, a first non-linear interaction within a productivity application, wherein the productivity application comprises a composition layer and a discovery layer; determining, by a natural user interface (NUI) engine, a first user intent based on the first non-linear interaction; generating, by the NUI engine, a first prompt based on the first user intent and the first non-linear interaction; submitting, by the NUI engine, the first prompt to a content generator, wherein the first prompt requests a first response from the content generator based on the first non-linear interaction; receiving, by the NUI engine, the first response from the content generator; and generating, by the NUI engine, a first card based on the first response within the discovery layer of the productivity application, wherein the discovery layer overlays on to the composition layer.

Example 8 is the method of any previous or subsequent Example, wherein the first non-linear interaction comprises one of: drawing on a content object within the productivity application; clustering two or more content objects to be within spatial proximity to one another within the productivity application; speaking with reference to one or more content objects within the productivity application; or gesturing with reference to one or more content objects within the productivity application.

Example 9 is the method of any previous or subsequent Example, wherein determining, by the NUI engine, the first user intent based on the first non-linear interaction comprises: determining, by the NUI engine, a user profile associated with the client device; and determining, by the NUI engine, the first user intent based on the user profile, wherein the user profile comprises an interaction history for the client device.

Example 10 is the method of any previous or subsequent Example, wherein the discovery layer comprises one or more content objects and determining, by the NUI engine, the first user intent based on the first non-linear interaction comprises: determining, by the NUI engine, the first user intent for the first prompt based on the spatial proximity of each of the one or more content objects within the discovery layer.

Example 11 is the method of any previous or subsequent Example, wherein the first non-linear interaction within the composition layer comprises handwriting within the composition layer and determining, by the NUI engine, the first user intent based on the first non-linear interaction comprises: determining, by the NUI engine, text based on the handwriting; determining, by the NUI engine, spatial proximity of the handwriting to one or more content objects within the discovery layer; and determining, by the NUI engine, the first user intent based on the text and the spatial proximity of the handwriting to one or more content objects within the discovery layer.

Example 12 is the method of any previous or subsequent Example, the method further comprising: receiving, from the client device, a second non-linear interaction with the first card; determining, by the NUI engine, a second user intent based on the second non-linear interaction with the first card; generating, by the NUI engine, a second prompt based on the second user intent and content of the first card; submitting, by the NUI engine, the second prompt to the content generator; receiving, by the NUI engine, a second response from the content generator based on the second prompt; and generating, by the NUI engine, a second card based on the second response within the discovery layer of the productivity application.

Example 13 is the method of any previous or subsequent Example, wherein the composition layer comprises a first set of content objects and the discovery layer comprises a second set of content objects, and the method further comprises: receiving, by the client device, an indication to rearrange the second set of content objects; and modifying, by the NUI engine, the second set of content objects based on the indication within the discovery layer, wherein the second set of content objects are rearranged in the discovery layer without impacting the first set of content objects in the composition layer.

Example 14 is the method of any previous or subsequent Example, wherein determining, by the NUI engine, the first user intent based on the first non-linear interaction comprises determining, by the NUI engine, a type of response intended to be received from the content generator based on the first non-linear interaction.

Example 15 is a computer readable storage media comprising processor-executable instructions configured to cause one or more processors to: receive, from a client device, a first non-linear interaction within a productivity application, wherein the productivity application comprises a composition layer and a discovery layer; determine, by a natural user interface (NUI) engine, a first user intent based on the first non-linear interaction; generate, by the NUI engine, a first prompt based on the first user intent and the first non-linear interaction; submit, by the NUI engine, the first prompt to a content generator, wherein the first prompt requests a first response from the content generator based on the first non-linear interaction; receive, by the NUI engine, the first response from the content generator; and generate, by the NUI engine, a first card based on the first response within the discovery layer of the productivity application, wherein the discovery layer overlays on to the composition layer.

Example 16 is the computer readable storage media of any previous or subsequent Example, wherein the processor-executable instructions to determine, by the NUI engine, the first user intent based on the first non-linear interaction cause the one or more processors to further execute processor-executable instructions stored in the computer readable storage media to: determine, by the NUI engine, the first user intent based on a spatial proximity of the first non-linear interaction with one or more content objects within the discovery layer.

Example 17 is the computer readable storage media of any previous or subsequent Example, wherein the processor-executable instructions cause the one or more processors to further execute processor-executable instructions stored in the computer readable storage media to: determine, by the NUI engine, prompting instructions for the discovery layer; and generate, by the NUI engine, the first prompt based on the prompting instructions.

Example 18 is the computer readable storage media of any previous or subsequent Example, wherein the processor-executable instructions to receive, from the client device, the first non-linear interaction with the productivity application cause the one or more processors to further execute processor-executable instructions stored in the computer readable storage media to: receive, by the NUI engine, an audio signal based on a user speaking with reference to one or more content objects within the productivity application; and determine, by the NUI engine, the one or more content objects to which the audio signal is directed.

Example 19 is the computer readable storage media of any previous or subsequent Example, wherein the processor-executable instructions to receive, from the client device, the first non-linear interaction within the productivity application cause the one or more processors to further execute processor-executable instructions stored in the computer readable storage media to: receive, by the NUI engine, a video signal based on a user gesturing with reference to one or more content objects within the productivity application; and determine, by the NUI engine, the one or more content objects to which the gestures are directed.

Example 20 is the computer readable storage media of any previous or subsequent Example, wherein the processor-executable instructions to receive, from the client device, the first non-linear interaction within the productivity application cause the one or more processors to further execute processor-executable instructions stored in the computer readable storage media to: receive, by the NUI engine, a mark made with reference to one or more content objects within the productivity application; and determine, by the NUI engine, the first user intent based on the mark.

## Claims

1. A system comprising:
one or more computer readable storage media (1803);
one or more processors (1802) (1802) operatively coupled with the one or more computer readable storage media (1803); and
an application (102) comprising program instructions (1806) stored on the one or more computer readable storage media (1803) that, when executed by the one or more processors (1802), direct a computing system (1801) to at least:
receive, from a client device (210), a first non-linear interaction within a productivity application (214), wherein the productivity application (214) comprises a composition layer (440) and a discovery layer (442);
determine, by a natural user interface (NUI) engine (206), a first user intent based on the first non-linear interaction;
generate, by the NUI engine (206), a first prompt based on the first user intent and the first non-linear interaction;
submit, by the NUI engine (206), the first prompt to a content generator (208), wherein the first prompt requests a first response from the content generator (208) based on the first non-linear interaction;
receive, by the NUI engine (206), the first response from the content generator (208); and
generate, by the NUI engine (206), a first card (452) based on the first response within the discovery layer (442) of the productivity application (214), wherein the discovery layer (442) overlays on to the composition layer (440).

2. The system of claim 1, wherein the discovery layer (442) comprises one or more content objects and the program instructions (1806) further direct the computing system (1801) to:
determine, by the NUI engine (206), spatial proximity of the first non-linear interaction to the one or more content objects; and
determine, by the NUI engine (206), the first user intent based on the spatial proximity of the first non-linear interaction.

3. The system of claim 1, wherein the discovery layer (442) comprises one or more content objects and the program instructions (1806) to generate, by the NUI engine (206), the first prompt based on the first user intent based on the first non-linear interaction cause, when executed by the one or more processors (1802), to further direct the computing system (1801) to:
determine, by the NUI engine (206), that the first non-linear interaction is made with respect to a first content object of the one or more content objects; and
generate, by the NUI engine (206), the first prompt based on the first user intent and the first content object.

4. The system of claim 1, wherein the program instructions (1806) further direct the computing system (1801) to:
receive, from the client device (210), a second non-linear interaction within the productivity application (214) temporally proximate to the first non-linear interaction;
determine, by the NUI engine (206), that the first non-linear interaction and the second non-linear interaction are related based on their temporal proximity;
determine, by the NUI engine (206), the first user intent based on the first non-linear interaction and the second non-linear interaction;
determine, by the NUI engine (206), respective content object that each of the first non-linear interaction and the second non-linear interaction were directed to; and
generate, by the NUI engine (206), the first prompt based on the first user intent and the respective content object.

5. A method (300) comprising:
receiving, from a client device (210), a first non-linear interaction within a productivity application (214), wherein the productivity application (214) comprises a composition layer (440) and a discovery layer (442);
determining, by a natural user interface (NUI) engine (206), a first user intent based on the first non-linear interaction;
generating, by the NUI engine (206), a first prompt based on the first user intent and the first non-linear interaction;
submitting, by the NUI engine (206), the first prompt to a content generator (208), wherein the first prompt requests a first response from the content generator (208) based on the first non-linear interaction;
receiving, by the NUI engine (206), the first response from the content generator (208); and
generating, by the NUI engine (206), a first card (452) based on the first response within the discovery layer (442) of the productivity application (214), wherein the discovery layer (442) overlays on to the composition layer (440).

6. The method of claim 5, wherein the first non-linear interaction comprises one of:
drawing on a content object within the productivity application (214);
clustering two or more content objects to be within spatial proximity to one another within the productivity application (214);
speaking (236) with reference to one or more content objects within the productivity application (214); or
gesturing (238) with reference to one or more content objects within the productivity application (214).

7. The method of claim 5, wherein determining, by the NUI engine (206), the first user intent based on the first non-linear interaction comprises:
determining, by the NUI engine (206), a user profile associated with the client device (210); and
determining, by the NUI engine (206), the first user intent based on the user profile, wherein the user profile comprises an interaction history for the client device (210).

8. The method of claim 5, wherein the discovery layer (442) comprises one or more content objects and determining, by the NUI engine (206), the first user intent based on the first non-linear interaction comprises:
determining, by the NUI engine (206), the first user intent for the first prompt based on the spatial proximity of each of the one or more content objects within the discovery layer (442).

9. The method of claim 5, wherein the first non-linear interaction within the composition layer (440) comprises handwriting within the composition layer (440) and determining, by the NUI engine (206), the first user intent based on the first non-linear interaction comprises:
determining, by the NUI engine (206), text based on the handwriting;
determining, by the NUI engine (206), spatial proximity of the handwriting to one or more content objects within the discovery layer (442); and
determining, by the NUI engine (206), the first user intent based on the text and the spatial proximity of the handwriting to one or more content objects within the discovery layer (442).

10. The method of claim 5, wherein the composition layer (440) comprises a first set of content objects and the discovery layer (442) comprises a second set of content objects, and the method further comprises:
receiving, by the client device (210), an indication to rearrange the second set of content objects; and
modifying, by the NUI engine (206), the second set of content objects based on the indication within the discovery layer (442), wherein the second set of content objects are rearranged in the discovery layer (442) without impacting the first set of content objects in the composition layer (440).

11. The method of claim 5, wherein determining, by the NUI engine (206), the first user intent based on the first non-linear interaction comprises determining, by the NUI engine (206), a type of response intended to be received from the content generator (208) based on the first non-linear interaction.

12. A computer readable storage media (1803) comprising processor-executable instructions (1806) configured to cause one or more processors (1802) to:
receive, from a client device (210), a first non-linear interaction within a productivity application (214), wherein the productivity application (214) comprises a composition layer (440) and a discovery layer (442);
determine, by a natural user interface (NUI) engine (206), a first user intent based on the first non-linear interaction;
generate, by the NUI engine (206), a first prompt based on the first user intent and the first non-linear interaction;
submit, by the NUI engine (206), the first prompt to a content generator (208), wherein the first prompt requests a first response from the content generator (208) based on the first non-linear interaction;
receive, by the NUI engine (206), the first response from the content generator (208); and
generate, by the NUI engine (206), a first card (452) based on the first response within the discovery layer (442) of the productivity application (214), wherein the discovery layer (442) overlays on to the composition layer (440).

13. The computer readable storage media (1803) of claim 12, wherein the processor-executable instructions (1806) to receive, from the client device (210), the first non-linear interaction with the productivity application (214) cause the one or more processors (1802) to further execute processor-executable instructions (1806) stored in the computer readable storage media (1803) to:
receive, by the NUI engine (206), an audio signal based on a user speaking with reference to one or more content objects within the productivity application (214); and
determine, by the NUI engine (206), the one or more content objects to which the audio signal is directed.

14. The computer readable storage media (1803) of claim 12, wherein the processor-executable instructions (1806) to receive, from the client device (210), the first non-linear interaction within the productivity application (214) cause the one or more processors (1802) to further execute processor-executable instructions (1806) stored in the computer readable storage media (1803) to:
receive, by the NUI engine (206), a video signal based on a user gesturing (238) with reference to one or more content objects within the productivity application (214); and
determine, by the NUI engine (206), the one or more content objects to which the gestures (238) are directed.

15. The computer readable storage media (1803) of claim 12, wherein the processor-executable instructions (1806) to receive, from the client device (210), the first non-linear interaction within the productivity application (214) cause the one or more processors (1802) to further execute processor-executable instructions (1806) stored in the computer readable storage media (1803) to:
receive, by the NUI engine (206), a mark made with reference to one or more content objects within the productivity application (214); and
determine, by the NUI engine (206), the first user intent based on the mark.
